# EUROPEAN PATENT SPECIFICATION

(11) **EP 3 163 787 B1**
(45) Date of publication and mention of the grant of the patent: **17.06.2020**
(21) Application number: 14896822.5
(22) Date of filing: 14.10.2014
(51) Int. Cl.: H04J 3/06, H04W 56/00

(54) **METHOD AND DEVICE FOR COMPENSATING TIME STAMP OF CLOCK**
VERFAHREN UND VORRICHTUNG ZUR KOMPENSIERUNG DES ZEITSTEMPELS EINER UHR
PROCÉDÉ ET DISPOSITIF DE COMPENSATION DE L'HORODATAGE D'UNE HORLOGE

(30) Priority: 30.06.2014 CN 201410307725
(43) Date of publication of application: 03.05.2017
(73) Proprietor: ZTE Corporation, Shenzhen, Guangdong 518057 (CN)
(72) Inventor: XIANG, Xiong, Shenzhen Guangdong 518057 (CN); SHAO, Kun, Shenzhen Guangdong 518057 (CN)
(74) Representative: Baudler, Ron
(86) International application number: PCT/CN2014/088577
(87) International publication number: WO 2016/000352

(56) References cited:
- CN-A- 102 104 475
- CN-A- 102 144 363
- CN-A- 102 231 907
- CN-A- 103 763 055
- US-A1- 2008 244 304
- US-A1- 2010 030 916
- US-A1- 2014 021 356
- US-B2- 8 698 530
- EBU ET AL: "Request for Standardization", JOINT EBU/SMPTE TASK FORCE ON TIMING AND SYNCHRONISA, , 1 August 2009 (2009-08-01), pages 1-115, XP008113642, Retrieved from the Internet: URL:http://store.smpte.org/product-p/tfts% 20rfs-2009.htm [retrieved on 2009-08-01]

## Description

### Technical Field

The present invention relates to the field of communications, and more particularly to a method and device for compensating a timestamp of a clock.

### Background

In modern mobile communication networks, various communication devices need to keep time synchronization, to ensure that the handover of base stations has no failures like dropped calls during user movement. At present, only Global Positioning System GPS and Institute of Electrical and Electronic Engineers IEEE 1588 can meet this requirement. It is not convenient to widely promote GPS due to limitations of system cost and security. IEEE 1588 is usually called Precision Time Protocol PTP, and its full name is a Precision Clock Synchronization Protocol for Networked Measurement and Control Systems. An IEEE 1588 system only requires a high-precision time source to input to a bearer network, which make clock time information of various base stations automatically achieve time synchronization of a sub-microsecond time precision in the whole network according to the quality of clocks and a master-slave relation of systems etc. Therefore, system cost is reduced and security and stability of communication networks are enhanced. Based on these considerations, the IEEE 1588 technology is currently widely applied in the transmission field.

The time precision of IEEE 1588 system is mainly decided by the time precision of master and slave nodes. The processing of a time synchronization message in the master and slave nodes is based on a local time counter, and the precision of the counter directly affects a time synchronization precision of the whole system.

The existing method for realizing a system time counter is as follows. If a system clock is a precise clock of 125M, 1 second is just a time length that a clock counter of 125MHz counts 125,000,000 clock cycles. A clock cycle of 125M is 8ns. According to the 1588 protocol, the timestamp is an 80-bit time deviation value, that is, a time deviation between the current time and the reference time given by taking 00:00:00 on January 1, 1970 as the reference time. In an 80-bit counter, high 48 bits are an integer part of second, and low 32 bits are an integer part of nanosecond. So the current local time is acquired through the fixed addition of each cycle.

However, the time precision of the whole system is limited by a frequency of the time counter, and the highest precision can only be 8ns. Since the error of a time synchronization system also accumulates continuously after passing through different transmission devices, only is the precision of a local timestamp improved, the system error can be reduced.

US 8698530 B2 discloses method of synchronizing clocks between a first reference clock and a second clock to be slaved on the frequency of the reference clock, the two sharing a common clock, this method comprising the following steps: calculation of the integer part of the timestamp using the reference clock and the common clock; generation of a system clock local to the reference clock; calculation of the phase shift between the system clock signal and the reference clock signal; calculation of the phase shift between the system clock signal and the common clock signal; calculation of the decimal part of the timestamp; sending of the decimal timestamp to the second clock; slaving of the second clock using the common clock and the timestamp received.

US 2008/0244304 A1 discloses various embodiments utilize different counters or clocks, working in concert, to smooth out position information that is derived for a rendering/capturing device. Specifically, in at least some embodiments, each counter or clock has a different speed. A faster counter or clock is used to determine intra-transition position offsets relative to a slower counter or clock.

CN 102231907 A discloses a clock synchronization method and an apparatus in a transmission system. The method comprises the addition of carry values generated by the decimal portion of a system station clock period in t clock periods is calculated, wherein t is the total delay of a clock correction; a correction delay compensation value is calculated through t, the addition of the carry values and the integer portion of the system station clock period and the correction delay compensation value is used to carry out a synchronization correction towards a system subordinated clock. According to the invention, the problem in the prior art that the precision of system clock synchronization is low is solved and the clock synchronization precision of the system is increased.

### Summary of the Invention

Embodiments of the present invention provide a method and device for compensating a timestamp of a clock according to appended independent claims, which can improve the precision of a timestamp in a local system. Further improvements and embodiments are provided in the dependent claims.

Also provided is a method for compensating a timestamp of a clock. The method includes that the following steps.

A first time counter and a second time counter are set respectively by using clocks of different sources.

A first timestamp value read from the first time counter and a second timestamp value read from the second time counter are acquired respectively by using a timestamp record signal at a preset time point.

A timestamp compensation value is acquired according to the first timestamp value and the second timestamp value.

An integer part of a timestamp of a clock in a local system is compensated according to the timestamp compensation value.

Herein, both the first time counter and the second time counter are 80-bit counters.

Herein, the first time counter includes: a first integer second counter that carries out a calculation of the integer second part and a first integer nanosecond counter that carries out a calculation of the integer nanosecond part and a carry operation.

The second time counter includes: a second integer second counter that carries out a calculation of the integer second part, a second integer nanosecond counter that carries out a calculation of the integer nanosecond part and a carry operation, and a second nanosecond fraction counter that carries out a calculation of the fraction part of nanosecond and a carry operation.

Herein, the first integer second counter is a 48-bit counter, and the first integer nanosecond counter is a 32-bit counter. Herein, high 16 bits of the 48-bit counter are set by CPU.

The second integer second counter is a 32-bit counter, and the second integer nanosecond counter is a 32-bit counter, and the second nanosecond fraction counter is a 16-bit counter.

The step of acquiring a first timestamp value read from the first time counter by using a timestamp record signal at a preset time point includes that:
when the timestamp record signal at the preset time point is encountered, a first value of the first integer second counter and a second value of the first integer nanosecond counter that are read from the first time counter are acquired; and
the first value and the second value are formed into the first timestamp value.

Herein, the step of acquiring a second timestamp value read from the second time counter by using a timestamp record signal at a preset time point includes that:
when the timestamp record signal at the preset time point appears, a third value of the second integer second counter, a fourth value of the second integer nanosecond counter and a fifth value of the second nanosecond fraction counter that are read from the second time counter are acquired; and
the third value, the fourth value and the fifth value are formed into the second timestamp value.

Herein, the step of acquiring a timestamp compensation value according to the first timestamp value and the second timestamp value includes the following operations.

A low 64-bit numerical value of the first time counter and a high 64-bit numerical value of the second time counter are added and calculated an average value to acquire the timestamp compensation value.

Or, the integer second parts and the integer nanosecond parts of the first time counter and the second time counter are added respectively for sums to acquire a 33-bit numerical value of the integer second parts and a 33-bit numerical value of the integer nanosecond parts. Then a shift average operation is performed on the two parts of data respectively to acquire an integer second part with a 32-bit width and an integer nanosecond part with a 32-bit width. After that, high 16 bits of the integer second part are set by CPU to acquire the timestamp compensation value.

Also provided is a device for compensating a timestamp of a clock. The device includes a timer module, a first acquiring module, a second acquiring module and a compensating module.

The timer module is arranged to set the first time counter and the second time counter by using the clocks of different sources respectively.

The first acquiring module is arranged to acquire the first timestamp value read from the first time counter and the second timestamp value read from the second time counter by using a timestamp record signal at a preset time point respectively.

The second acquiring module is arranged to acquire the timestamp compensation value according to the first timestamp value and the second timestamp value.

The compensating module is arranged to compensate an integer part of the timestamp of the clock in the local system according to the timestamp compensation value.

Herein, both the first time counter and the second time counter are 80-bit counters.

Herein, the first time counter includes: the first integer second counter that carries out a calculation of the integer second part and the first integer nanosecond counter that carries out a calculation of the integer nanosecond part and a carry operation.

The second time counter includes: the second integer second counter that carries out a calculation of the integer second part, the second integer nanosecond counter that carries out a calculation of the integer nanosecond part and the carry operation, and the second nanosecond fraction counter that carries out a calculation of the fraction part of nanosecond and the carry operation.

Herein, the first integer second counter is a 48-bit counter, and the first integer nanosecond counter is a 32-bit counter, Herein, high 16 bits of the 48-bit counter are set by CPU.

The second integer second counter is a 32-bit counter, and the second integer nanosecond counter is a 32-bit counter, and the second nanosecond fraction counter is a 16-bit counter.

Herein, the first acquiring module includes a first acquiring submodule and a second acquiring submodule.

The first acquiring submodule is arranged to, when the timestamp record signal at the preset time point is encountered, acquire a first value of the first integer second counter and a second value of the first integer nanosecond counter which are read from the first time counter, and form the first value and the second value into the first timestamp value.

The second acquiring submodule is arranged to, when the timestamp record signal at the preset time point is encountered, acquire a third value of the second integer second counter, a fourth value of the second integer nanosecond counter and a fifth value of the second nanosecond fraction counter which are read from the second time counter, and form the third value, the fourth value and the fifth value into the second timestamp value.

Herein, the second acquiring module includes a judging submodule and a calculating submodule.

The judging submodule is arranged to judge whether both the second integer nanosecond counter and the second nanosecond fraction counter have a carry.

The calculating submodule is arranged to, according to a judgment result of the judging submodule, average a sum of a low 64-bit numerical value of the first time counter and a high 64-bit numerical value of the second time counter to acquire the timestamp compensation value, or first add the low 64-bit numerical value of the first time counter and the high 64-bit numerical value of the second time counter for a sum, then form an 80-bit numerical value with a 16-bit numerical value of the second nanosecond fraction counter , and after waiting for data to be stable, shift the 80 bits to calculate an average value to acquire the timestamp compensation value.

The technical solution of the present invention has the beneficial effects as follows.

In the above solution, the first time counter and the second time counter are set respectively by using the clocks of different sources, and the first timestamp value read from the first time counter and the second timestamp value read from the second time counter are acquired respectively by using the timestamp record signal at the preset time point; the timestamp compensation value is acquired according to the first timestamp value and the second timestamp value; and the integer part of the timestamp of the clock in the local system is compensated according to the timestamp compensation value. A local clock and a service clock are enabled to count simultaneously to build timers working in two clock domains respectively. The timestamp values are read from two time counters through the timestamp record signal at a critical time point respectively, and comparison and average are performed to complete the compensation of the integer part of the timestamp. In such a manner, the precision of the timestamp can be improved to a great degree. Compared with the original deviation of ±8ns in the situation of 125M, after implementing double-clock sampling and double-edge accumulation, the current deviation is within ±3.6ns, that is, the precision is improved by 55%.

### Brief Description of Drawings

FIG. 1 is a flowchart of a method for compensating a timestamp of a clock according to the present invention.
FIG. 2 is a format diagram of a time counter according to the present invention.
FIG. 3 is a detailed flowchart of a method for compensating a timestamp according to the present invention.

### Specific Embodiments

To make the technical problem to be solved in the present invention, the technical solutions and the advantages of the present invention more clear, an elaboration is given below in combination with the accompanying drawings and specific embodiments.

The technical problem to be solved in the present invention is: to provide an implementation method for improving a precision of a precise timestamp in a transmission system, which can compensate the integer part of a clock by means of sampling a plurality of clocks during the process of recording the local timestamp, thus improving the precision of the timestamp of the system.

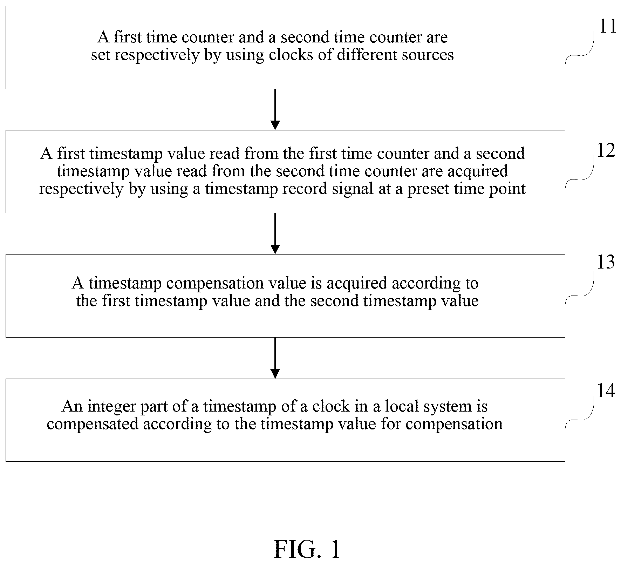

As shown in FIG. 1, an embodiment of the present invention provides a method for compensating a timestamp of a clock, which includes the following steps:
In step 11, a first time counter and a second time counter are set respectively by using clocks of different sources.

In step 12, a first timestamp value read from the first time counter and a second timestamp value read from the second time counter are acquired respectively by using a timestamp record signal at a preset time point.

In step 13, a timestamp compensation value is acquired according to the first timestamp value and the second timestamp value.

In step 14, the integer part of a timestamp of a clock in a local system is compensated according to the timestamp compensation value. In the embodiment, the first time counter and the second time counter are set respectively by using the clocks of different sources. Herein, the first time counter may be a counter corresponding to the local system, and the second time counter may be a counter corresponding to a service clock. The first timestamp value read from the first time counter and the second timestamp value read from the second time counter are acquired respectively by using the timestamp record signal at the preset time point. The timestamp compensation value is acquired according to the first timestamp value and the second timestamp value. The integer part of the timestamp of the clock in the local system is compensated according to the timestamp compensation value. The local clock and the service clock are enabled to count simultaneously to build timers working in two clock domains respectively. The timestamp values are read from two time counters through the timestamp record signal at a critical time point respectively, and comparison and average are performed to complete the compensation of the integer part of the timestamp. In such a manner, the precision of the timestamp can be improved to a great degree. Compared with the original deviation of ±8ns in the situation of 125M, after implementing double-clock sampling and double-edge accumulation, the current deviation is within ±3.6ns, that is, the precision is improved by 55%.

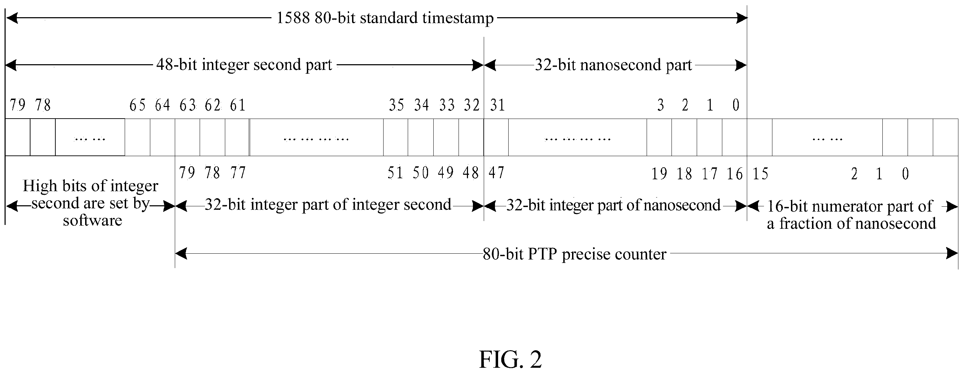

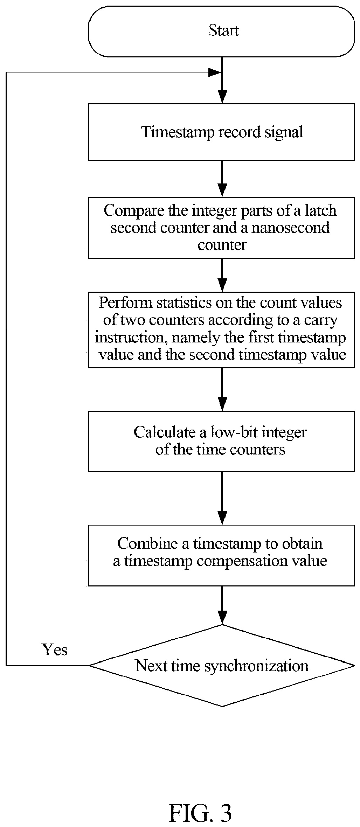

As shown in FIG. 2 and FIG. 3, both the first time counter and the second time counter are 80-bit counters.

Herein, the first time counter includes: a first integer second counter that carries out a calculation of the integer second part and a first integer nanosecond counter that carries out a calculation of the integer nanosecond part and a carry operation.

The second time counter includes: a second integer second counter that carries out a calculation of the integer second part, a second integer nanosecond counter that carries out a calculation of the integer nanosecond part and a carry operation, and a second nanosecond fraction counter that carries out a calculation of the fraction part of nanosecond and a carry operation.

Herein, the first integer second counter is a 48-bit counter, and the first integer nanosecond counter is a 32-bit counter; and high 16 bits of the 48-bit counter are set by CPU.

The second integer second counter is a 32-bit counter, and the second integer nanosecond counter is a 32-bit counter, and the second nanosecond fraction counter is a 16-bit counter.

In a system, two clocks of different sources may be used to build the time counters respectively. The first clock is the system clock, namely 125M clock, corresponding to the first time counter. The second clock is the service clock (which may be set according to different services), corresponding to the second time counter. Supposed that the frequency of a certain service clock is 155.52MHz, herein the service clock is a reference clock recovered by a service, and 1 second is just a time length that the clock of 155.52MHz counts 155,520,000 clock cycles. The clock cycle of the clock of 155.52MHz is T₁₅₅._{52M=}(3125/486)ns=6+(209/486)ns. It can be seen that the clock cycle of the service clock is composed of the integer part and the fraction part. So the counter may be divided into an integer counter and a fraction counter when a precise time counter is set. The integer counter mainly carries out the calculation of the integer part, and the fraction counter mainly carries out the calculation of the fraction part and the carry operation.

Since the integer second part of 48 bits of the 1588 precise timestamp can implement the time counting in a very wide range, generally the high bits of the timestamp rarely vary, and a PTP precise counter, namely a first integer part counter of the first time counter, may be set as 32 bits to meet the practical use. The absent integer second part of high 16 bits may be directly set by software. The first integer part counter is a counter corresponding to the integer second part. The integer nanosecond part is represented by a 32-bit width (1s=109ns=0x3B9A_CA00ns). In addition, when the clock cycle is not an integer nanosecond, a decimal part appears during accumulation, so a decimal part of 16 bits is introduced here, which is called a fraction part, to carry out the accumulation of the decimal part, as shown in FIG. 2.

Both the two counters use a pipeline mode to separate a bit-width for counting. The counters may be divided into three parts, namely the integer second counter (32 bits), the integer nanosecond counter (32 bits) and the nanosecond fraction counter (16 bits). Herein, the nanosecond fraction counter is not needed for the system clock whose reference clock is 125M. When the system is reset, the first time counter and the second time counter need to use the same reset signal, to ensure that count values of the first time counter and the second time counter are consistent after resetting. Both the rising edge and the falling edge of the clock are used for counting in low counting bits of the integer nanosecond counter. For example, when the original clock counter of 125M counts once only at each rising edge, a counting cycle is 8ns; if the counter counts at both the rising edge and the falling edge of the clock, a counting cycle is 4ns, and the integer nanosecond part performs an operation of adding 4 at each clock edge. When the integer part of nanosecond exceeds 0x3B9A_CA00, a carry operation is performed on the integer second part, and at the same time, the nanosecond part also needs to subtract 0x3B9A_CA00. The same goes for the fraction counter. A calculation is performed after dividing an accumulation factor of the integer part and the fraction part by 2. The clock cycle of the clock of 155.52MHz is T₁₅₅._{52M} =(3125/486)ns=6+(209/486)ns. When both the rising edge and the falling edge are counted, the counting cycle is T₁₅₅._{52Mx2=}(3125/(486×2))ns=3+(209/972)ns. The numerator of the decimal part is cached in a 16-bit register. Another two 16-bit registers are needed to cache the numerator constant and the denominator constant of the decimal part. The values of these constants may be set by CPU to meet the counting requirements at different clock frequencies. The accumulation of the numerator and the comparison between the numerator and denominator are completed in each counting cycle. The numerator part is accumulated with 209 in each cycle. If the numerator part is greater than the denominator part after the accumulation in the next cycle, the numerator part needs to subtract the denominator part (972) while performing the carry operation on the integer nanosecond part in the next cycle. The above may be completed by using a one-from-two selecting module. First it is judged whether the carry operation needs to be performed on the numerator part at the next clock edge. The judgment may be realized by comparing the numerator part with 763(972-209=763). If the numerator part is greater than or equal to this value, the carry operation needs to be performed. When the carry operation does not need to be performed on the numerator part in the next cycle, a result is obtained by accumulating the numerator with 209. When the carry operation needs to be performed, a result is obtained by adding the numerator with (209-972=-763), and at the same time, a carry is produced. It should be noted that only the low counting bits of the integer nanosecond use double edges for counting, the high counting bits of the integer nanosecond and the integer second part still use a single edge for counting. A carry instruction lasts for a whole cycle, so there is no problem of missing a carry.

In a specific embodiment of the present invention, when the time counter is read, the step 12 includes the following steps.

In step 121, when a timestamp record signal at the preset time point is encountered, a first value of the first integer second counter and a second value of the first integer nanosecond counter that are read from the first time counter are acquired.

In step 122, the first value and the second value are formed into the first timestamp value.

In step 123, when the timestamp record signal at the preset time point is encountered, a third value of the second integer second counter, a fourth value of the second integer nanosecond counter and a fifth value of the second nanosecond fraction counter that are read from the second time counter are acquired.

In step 124, the third value, the fourth value and the fifth value are formed into the second timestamp value.

Correspondingly, the step 13 may include that the following operations.

A low 64-bit numerical value of the first time counter and a high 64-bit numerical value of the second time counter are added and calculated an average value to acquire the timestamp compensation value.

Or, the integer second parts and the integer nanosecond parts of the first time counter and the second time counter are added respectively for sums to acquire a 33-bit numerical value of the integer second parts and a 33-bit numerical value of the integer nanosecond parts. Then a shift average operation is performed on the two parts of data to acquire an integer second part with a 32-bit width and an integer nanosecond part with a 32-bit width. After that, high 16 bits of the integer second part are set by CPU to acquire a counter in IEEE-1588 standard, that is, the timestamp compensation value is acquired.

At the moment that a timestamp needs to be stamped, precise time values in two clock domains can be acquired respectively by simultaneously sampling the results of two counters. In the process of reading the counters, Since a signal for time stamping is in one clock domain with the system clock or the service clock, synchronous sampling is performed on one counter and asynchronous sampling is performed on the other counter in the process of sampling. When the timestamp is taken, only the integer second part (32 bits) and the integer nanosecond part (32 bits) of the PTP precise counter need to be taken, so the timestamp value is total 64 bits. The extra high 16 bits of the integer second part are set by CPU. The timestamp value with 64 bits and the extra high 16 bits form a standard 80-bit 1588 precise timestamp. During data processing, first the integer parts of the lowest count bit values of two counters are added to calculate an average value by taking a read value of the clock counter on which the synchronous sampling is performed as a reference. Before adding, whether the fraction counter and the low-bit integer counter have a carry may be judged first. If so, all the 80 bits data are added, and an average value is calculated by shifting after the addition is completed and the data is stable. Certainly, there is also no need to judge whether the fraction counter and the low-bit integer counter have a carry, but the integer parts of the two counters are directly averaged. The process of averaging can basically be completed within a determined cycle(s) without affecting the time stamping process downstream.

According to the abovementioned embodiment of the present invention, in the time stamping process, the local clock and the service clock count simultaneously to build the timers working in two clock domains respectively. The timestamp values are read from two time counters through the timestamp record signal at the critical time point respectively, and comparison and average are performed to complete the compensation of the integer part of the timestamp.

The system acquires the range of the precise clock by shorting the counting cycle of a low integer-bit counter and using the double-clock sampling mode at the same time. The system acquires the final timestamp by means of the average algorithm of a reference timestamp and a service timestamp. Therefore, the precision of the timestamp can be improved to a great degree. Compared with the original deviation of ±8ns in the situation of 125M, after implementing double-clock sampling and double-edge accumulation, the current deviation is within ±3.6ns, that is, the precision is improved by 55%.

The embodiment of the present invention further provides a device for compensating a timestamp of a clock, which includes a timer module, a first acquiring module, a second acquiring module and a compensating module.

The timer module is arranged to set a first time counter and a second time counter by using the clocks of different sources respectively.

The first acquiring module is arranged to acquire a first timestamp value read from the first time counter and a second timestamp value read from the second time counter by using a timestamp record signal at a preset time point respectively.

The second acquiring module is arranged to acquire a timestamp compensation value according to the first timestamp value and the second timestamp value.

The compensating module is arranged to compensate the integer part of the timestamp of a clock in a local system according to the timestamp compensation value.

In the embodiment, the first time counter and the second time counter are set respectively by using the clocks of different sources. Herein, the first time counter may be a counter corresponding to the local system, and the second time counter may be, for example, a counter corresponding to a service clock. The first timestamp value read from the first time counter and the second timestamp value read from the second time counter are acquired respectively by using the timestamp record signal at the preset time point. The timestamp compensation value is acquired according to the first timestamp value and the second timestamp value. The integer part of the timestamp of the clock in the local system is compensated according to the timestamp compensation value. The local clock and the service clock are enabled to count simultaneously to build the timers working in two clock domains respectively. The timestamp values are read from two time counters through the timestamp record signal at the critical time point respectively, and comparison and average are performed to complete the compensation of the integer part of the timestamp. In such a manner, the precision of the timestamp can be improved to a great degree. Compared with the original deviation of ±8ns in the situation of 125M, after implementing double-clock sampling and double-edge accumulation, the current deviation is within ±3.6ns, that is, the precision is improved by 55%.

Herein, both the first time counter and the second time counter are 80-bit counters.

Herein, the first time counter includes: the first integer second counter that carries out a calculation of the integer second part and the first integer nanosecond counter that carries out a calculation of the integer nanosecond part and a carry operation.

The second time counter includes: the second integer second counter that carries out a calculation of the integer second part, the second integer nanosecond counter that carries out a calculation of the integer nanosecond part and a carry operation, and the second nanosecond fraction counter that carries out a calculation of the fraction part of nanosecond and the carry operation.

Herein, the first integer second counter is a 48-bit counter, and the first integer nanosecond counter is a 32-bit counter; and the high 16 bits of the 48-bit counter are set by CPU.

The second integer second counter is a 32-bit counter, and the second integer nanosecond counter is a 32-bit counter, and the second nanosecond fraction counter is a 16-bit counter.

Herein, the first acquiring module includes a first acquiring submodule and a second acquiring submodule.

The first acquiring submodule is arranged to, when the timestamp record signal at the preset time point is encountered, acquire a first value of the first integer second counter and a second value of the first integer nanosecond counter that are read from the first time counter, and form the first value and the second value into the first timestamp value.

The second acquiring submodule is arranged to, when the timestamp record signal at the preset time point is encountered, acquire a third value of the second integer second counter, a fourth value of the second integer nanosecond counter and a fifth value of the second nanosecond fraction counter that are read from the second time counter, and form the third value, the fourth value and the fifth value into the second timestamp value.

Herein, the second acquiring module includes a calculating submodule.

The calculating submodule is arranged to add a low 64-bit numerical value of the first time counter and a high 64-bit numerical value of the second time counter and calculate an average value to acquire the timestamp compensation value.

The calculating submodule is arranged to add the integer second parts and the integer nanosecond parts of the first time counter and the second time counter respectively for sums to acquire a 33-bit numerical value of the integer second parts and a 33-bit numerical value of the integer nanosecond parts, and then perform respectively a shift average operation on the two parts of data to acquire an integer second part with a 32-bit width and an integer nanosecond part with a 32-bit width, and after that, set, by CPU, high 16 bits of the integer second part to acquire the timestamp compensation value.

Embodiments of the device correspond to the abovementioned embodiments of the method. All the implementations in the abovementioned embodiments of the method are applied to the embodiments of the device, and can also achieve the same technical effects.

The above are the embodiments of the present invention. It should be indicated that, on the premise of not departing from the principles of the present invention, those ordinary skilled in the art may also make a number of improvements and supplements, and these improvements and supplements should fall within the protection scope of the present invention.

### Industrial Applicability

As abovementioned, the method and device for compensating a timestamp of a clock provided by the embodiments of the present invention have the following beneficial effects: the precision of the timestamp can be improved to a great degree. Compared with the original deviation of ±8ns in the situation of 125M, after implementing double-clock sampling and double-edge accumulation, the current deviation is within ±3.6ns, that is, the precision is improved by 55%.

## Claims

1. A method for compensating a timestamp of a clock, comprising:
setting a first time counter and a second time counter by using a clock in a local system and a service clock which are clocks of different sources respectively (11), wherein the clock in a local system and the service clock are enabled to count simultaneously;
acquiring a first timestamp value read from the first time counter and a second timestamp value read from the second time counter by using a timestamp record signal at a preset time point respectively (12);
acquiring a timestamp compensation value according to the first timestamp value and the second timestamp value (13); and
compensating an integer part of a timestamp of the clock in a local system according to the timestamp compensation value (14).

2. The method for compensating a timestamp of a clock according to claim 1, wherein both the first time counter and the second time counter are 80-bit counters.

3. The method for compensating a timestamp of a clock according to claim 2, wherein the first time counter comprises: a first integer second counter that carries out a calculation of the integer second part and a first integer nanosecond counter that carries out a calculation of the integer nanosecond part and a carry operation;
the second time counter comprises: a second integer second counter that carries out a calculation of the integer second part, a second integer nanosecond counter that carries out a calculation of the integer nanosecond part and a carry operation, and a second nanosecond fraction counter that carries out a calculation of the fraction part of nanosecond and a carry operation.

4. The method for compensating a timestamp of a clock according to claim 3, wherein the first integer second counter is a 48-bit counter, and the first integer nanosecond counter is a 32-bit counter; wherein, high 16 bits of the 48-bit counter are set by CPU; and
the second integer second counter is a 32-bit counter, and the second integer nanosecond counter is a 32-bit counter, and the second nanosecond fraction counter is a 16-bit counter.

5. The method for compensating a timestamp of a clock according to claim 3, wherein the step of acquiring a first timestamp value read from the first time counter by using a timestamp record signal at a preset time point comprises:
when the timestamp record signal at the preset time point is encountered, acquiring a first value of the first integer second counter and a second value of the first integer nanosecond counter that are read from the first time counter; and
forming the first value and the second value into the first timestamp value.

6. The method for compensating a timestamp of a clock according to claim 5, wherein the step of acquiring a second timestamp value read from the second time counter by using a timestamp record signal at a preset time point comprises:
when the timestamp record signal at the preset time point is encountered, acquiring a third value of the second integer second counter, a fourth value of the second integer nanosecond counter and a fifth value of the second nanosecond fraction counter that are read from the second time counter;
forming the third value, the fourth value and the fifth value into the second timestamp value.

7. The method for compensating a timestamp of a clock according to claim 6, wherein the step of acquiring a timestamp compensation value according to the first timestamp value and the second timestamp value comprises:
adding a low 64-bit numerical value of the first time counter and a high 64-bit numerical value of the second time counter and calculating an average value to acquire the timestamp compensation value; or
adding the integer second parts and the integer nanosecond parts of the first time counter and the second time counter respectively for sums to acquire a 33-bit numerical value of the integer second parts and a 33-bit numerical value of the integer nanosecond parts, and then performing a shift average operation on the two parts of data respectively to acquire an integer second part with a 32-bit width and an integer nanosecond part with a 32-bit width, and after that, setting, by CPU, high 16 bits of the integer second part to acquire the timestamp compensation value.

8. A device for compensating a timestamp of a clock, comprising:
a timer module, arranged to set a first time counter and a second time counter by using a clock in a local system and a service clock which are clocks of different sources respectively, wherein the clock in a local system and the service clock are enabled to count simultaneously;
a first acquiring module, arranged to acquire a first timestamp value read from the first time counter and a second timestamp value read from the second time counter by using a timestamp record signal at a preset time point respectively;
a second acquiring module, arranged to acquire a timestamp compensation value according to the first timestamp value and the second timestamp value; and
a compensating module, arranged to compensate an integer part of a timestamp of the clock in a local system according to the timestamp compensation value.

9. The device for compensating a timestamp of a clock according to claim 8, wherein both the first time counter and the second time counter are 80-bit counters.

10. The device for compensating a timestamp of a clock according to claim 9, wherein the first time counter comprises: a first integer second counter that carries out a calculation of the integer second part and a first integer nanosecond counter that carries out a calculation of the integer nanosecond part and a carry operation; and
the second time counter comprises: a second integer second counter that carries out a calculation of the integer second part, a second integer nanosecond counter that carries out a calculation of the integer nanosecond part and a carry operation, and a second nanosecond fraction counter that carries out a calculation of the fraction part of nanosecond and a carry operation.

11. The device for compensating a timestamp of a clock according to claim 10, wherein the first integer second counter is a 48-bit counter, and the first integer nanosecond counter is a 32-bit counter; wherein, high 16 bits of the 48-bit counter are set by CPU; and
the second integer second counter is a 32-bit counter, and the second integer nanosecond counter is a 32-bit counter, and the second nanosecond fraction counter is a 16-bit counter.

12. The device for compensating a timestamp of a clock according to claim 10, wherein the first acquiring module comprises:
a first acquiring submodule, arranged to, when the timestamp record signal at the preset time point is encountered, acquire a first value of the first integer second counter and a second value of the first integer nanosecond counter that are read from the first time counter, and form the first value and the second value into the first timestamp value; and
a second acquiring submodule, arranged to, when the timestamp record signal at the preset time point is encountered, acquire a third value of the second integer second counter, a fourth value of the second integer nanosecond counter and a fifth value of the second nanosecond fraction counter that are read from the second time counter, and form the third value, the fourth value and the fifth value into the second timestamp value.

13. The device for compensating a timestamp of a clock according to claim 12, wherein the second acquiring module comprises:
a calculating submodule, arranged to add a low 64-bit numerical value of the first time counter and a high 64-bit numerical value of the second time counter and calculate an average value to acquire the timestamp compensation value, or add the integer second parts and the integer nanosecond parts of the first time counter and the second time counter respectively for sums to acquire a 33-bit numerical value of the integer second parts and a 33-bit numerical value of the integer nanosecond parts, and then perform a shifting average operation on the two parts of data respectively to acquire an integer second part with a 32-bit width and an integer nanosecond part with a 32-bit width, and after that, set, by CPU, high 16 bits of the integer second part to acquire the timestamp compensation value.

## Patentansprüche

1. Verfahren zum Kompensieren eines Zeitstempels einer Uhr, umfassend:
Setzen eines ersten Zeitzählers und eines zweiten Zeitzählers unter Verwendung einer Uhr in einem lokalen System und einer Serviceuhr, die jeweils Uhren unterschiedlicher Quellen (11) sind, wobei die Uhr in einem lokalen System und die Serviceuhr in die Lage versetzt werden, gleichzeitig zu zählen;
Erfassen eines ersten Zeitstempelwertes, der aus dem ersten Zeitzähler gelesen wird und eines zweiten Zeitstempelwertes, der aus dem zweiten Zeitzähler gelesen wird, unter Verwendung eines Zeitstempel-Aufzeichnungssignals zu einem voreingestellten Zeitpunkt (12);
Erfassen eines Zeitstempelkompensationswertes gemäß dem ersten Zeitstempelwert und dem zweiten Zeitstempelwert (13); und
Kompensation eines ganzzahligen Teils eines Zeitstempels der Uhr in einem lokalen System gemäß dem Zeitstempel-Kompensationswert (14).

2. Verfahren zum Kompensieren eines Zeitstempels einer Uhr nach Anspruch 1, wobei sowohl der erste Zeitzähler als auch der zweite Zeitzähler 80-Bit-Zähler sind.

3. Verfahren zum Kompensieren eines Zeitstempels einer Uhr nach Anspruch 2, wobei der erste Zeitzähler umfasst: einen ersten ganzzahligen Sekundenzähler, der eine Berechnung des ganzzahligen Sekundenteils durchführt, und einen ersten ganzzahligen Nanosekundenzähler, der eine Berechnung des ganzzahligen Nanosekundenteils und eine Übertragungsoperation durchführt;
der zweite Zeitzähler umfasst: einen zweiten ganzzahligen Sekundenzähler, der eine Berechnung des ganzzahligen Sekundenteils durchführt, einen zweiten ganzzahligen Nanosekundenzähler, der eine Berechnung des ganzzahligen Nanosekundenteils und eine Übertragungsoperation durchführt, und einen zweiten Nanosekundenbruchteil-Zähler, der eine Berechnung des Bruchteils der Nanosekunde und eine Übertragungsoperation durchführt.

4. Verfahren zum Kompensieren eines Zeitstempels einer Uhr nach Anspruch 3, wobei der erste ganzzahlige Sekundenzähler ein 48-Bit-Zähler ist, und der erste ganzzahlige Nanosekundenzähler ein 32-Bit-Zähler ist; wobei die oberen 16 Bit des 48-Bit-Zählers durch die CPU gesetzt werden; und
der zweite ganzzahlige Sekundenzähler ist ein 32-Bit-Zähler, und der zweite ganzzahlige Nanosekundenzähler ist ein 32-Bit-Zähler, und der zweite Nanosekundenbruchteil-Zähler ist ein 16-Bit-Zähler.

5. Verfahren zum Kompensieren eines Zeitstempels einer Uhr nach Anspruch 3, wobei der Schritt des Erfassens eines ersten Zeitstempelwertes, der aus dem ersten Zeitzähler gelesen wird, unter Verwendung eines Zeitstempel-Aufzeichnungssignals zu einem voreingestellten Zeitpunkt umfasst:
wenn das Zeitstempel-Aufzeichnungssignal zu dem voreingestellten Zeitpunkt auftritt, Erfassen eines ersten Wertes des ersten ganzzahligen Sekundenzählers und eines zweiten Wertes des ersten ganzzahligen Nanosekundenzählers, die aus dem ersten Zeitzähler gelesen werden; und
den ersten Wert und den zweiten Wert zum ersten Zeitstempelwert zu bilden.

6. Verfahren zum Kompensieren eines Zeitstempels einer Uhr nach Anspruch 5, wobei der Schritt des Erfassens eines zweiten Zeitstempelwertes, der aus dem zweiten Zeitzähler gelesen wird, unter Verwendung eines Zeitstempel-Aufzeichnungssignals zu einem voreingestellten Zeitpunkt umfasst:
wenn das Zeitstempel-Aufzeichnungssignal zu dem voreingestellten Zeitpunkt auftritt, Erfassen eines dritten Wertes des zweiten ganzzahligen Sekundenzählers, eines vierten Wertes des zweiten ganzzahligen Nanosekundenzählers und eines fünften Wertes des zweiten Nanosekundenbruchteil-Zählers, die aus dem zweiten Zeitzähler gelesen werden;
Bilden des dritten Wertes, des vierten Wertes und des fünften Wertes zum zweiten Zeitstempelwert.

7. Verfahren zum Kompensieren eines Zeitstempels einer Uhr nach Anspruch 6, wobei der Schritt des Gewinnens eines Zeitstempelkompensationswertes gemäß dem ersten Zeitstempelwert und dem zweiten Zeitstempelwert umfasst:
Addieren eines niedrigen numerischen 64-Bit-Zahlenwertes des ersten Zeitzählers und eines hohen numerischen 64-Bit-Wertes des zweiten Zeitzählers und Berechnen eines Durchschnittswertes, um den Zeitstempel-Kompensationswert zu erhalten; oder
Addieren der ganzzahligen Sekundenteile und der ganzzahligen Nanosekundenteile des ersten Zeitzählers bzw. des zweiten Zeitzählers, um Summen von einem numerischen 33-Bit-Zahlenwert der ganzzahligen Sekundenteile und einem numerischen 33-Bit-Zahlenwert der ganzzahligen Nanosekundenteile zu erhalten, und dann Durchführen einer Verschiebungsmittelwertbildung an den beiden Datenteilen, um einen ganzzahligen Sekundenteil mit einer 32-Bit-Breite und einen ganzzahligen Nanosekundenteil mit einer 32-Bit-Breite zu erhalten, und danach Setzen von 16 Bit des ganzzahligen Sekundenteils durch die CPU auf hoch, um den Zeitstempelkompensationswert zu erfassen.

8. Vorrichtung zum Kompensieren eines Zeitstempels einer Uhr, umfassend:
ein Zeitgebermodul, das so beschaffen ist, dass es einen ersten Zeitzähler und einen zweiten Zeitzähler unter Verwendung einer Uhr in einem lokalen System und einer Serviceuhr, die jeweils Uhren unterschiedlicher Quellen sind, setzt, wobei die Uhr in einem lokalen System und die Serviceuhr in die Lage versetzt werden, gleichzeitig zu zählen;
ein erstes Erfassungsmodul, das so beschaffen ist, dass es einen ersten Zeitstempelwert, der aus dem ersten Zeitzähler gelesen wird, und einen zweiten Zeitstempelwert, der aus dem zweiten Zeitzähler gelesen wird, unter Verwendung eines Zeitstempel-Aufzeichnungssignals jeweils zu einem voreingestellten Zeitpunkt erfasst;
ein zweites Erfassungsmodul, das eingerichtet ist, um einen Zeitstempelkompensationswert gemäß dem ersten Zeitstempelwert und dem zweiten Zeitstempelwert zu erfassen; und
ein Kompensationsmodul, das so eingerichtet ist, dass es einen ganzzahligen Teil eines Zeitstempels die Uhr in einem lokalen System entsprechend dem Zeitstempel-Kompensationswert kompensiert.

9. Vorrichtung zur Kompensation eines Zeitstempels einer Uhr nach Anspruch 8, wobei sowohl der erste Zeitzähler als auch der zweite Zeitzähler 80-Bit-Zähler sind.

10. Vorrichtung zum Kompensieren eines Zeitstempels einer Uhr nach Anspruch 9, wobei der erste Zeitzähler umfasst: einen ersten ganzzahligen Sekundenzähler, der eine Berechnung des ganzzahligen Sekundenteils durchführt, und einen ersten ganzzahligen Nanosekundenzähler, der eine Berechnung des ganzzahligen Nanosekundenteils und eine Übertragungsoperation durchführt; und
der zweite Zeitzähler umfasst: einen zweiten ganzzahligen Sekundenzähler, der eine Berechnung des ganzzahligen Sekundenteils durchführt, einen zweiten ganzzahligen Nanosekundenzähler, der eine Berechnung des ganzzahligen Nanosekundenteils und eine Übertragungsoperation durchführt, und einen zweiten Nanosekundenbruchteil-Zähler, der eine Berechnung des Bruchteils der Nanosekunde und eine Übertragungsoperation durchführt.

11. Vorrichtung zum Kompensieren eines Zeitstempels einer Uhr nach Anspruch 10, wobei der erste ganzzahlige Sekundenzähler ein 48-Bit-Zähler und der erste ganzzahlige Nanosekundenzähler ein 32-Bit-Zähler ist; wobei die oberen 16 Bit des 48-Bit-Zählers von der CPU gesetzt werden; und
der zweite ganzzahlige Sekundenzähler ist ein 32-Bit-Zähler, und der zweite ganzzahlige Nanosekundenzähler ist ein 32-Bit-Zähler, und der zweite Nanosekundenbruchteil-Zähler ist ein 16-Bit-Zähler.

12. Vorrichtung zum Kompensieren eines Zeitstempels einer Uhr nach Anspruch 10, wobei das erste Erfassungsmodul umfasst:
ein erstes Erfassungs-Submodul, das so eingerichtet ist, dass es, wenn das Zeitstempel-Aufzeichnungssignal zu dem voreingestellten Zeitpunkt auftritt, einen ersten Wert des ganzzahligen ersten Sekundenzählers und einen zweiten Wert des ganzzahligen ersten Nanosekundenzählers erfasst, die aus dem ersten Zeitzähler ausgelesen werden, und den ersten Wert und den zweiten Wert zu dem ersten Zeitstempelwert bildet; und
ein zweites Erfassungs-Untermodul, das so eingerichtet ist, dass es, wenn das Zeitstempel-Aufzeichnungssignal zu dem voreingestellten Zeitpunkt auftritt, einen dritten Wert des zweiten ganzzahligen Sekundenzählers, einen vierten Wert des zweiten ganzzahligen Nanosekundenzählers und einen fünften Wert des zweiten Nanosekundenbruchteil-Zählers erfasst, die aus dem zweiten Zeitzähler ausgelesen werden, und den dritten Wert, den vierten Wert und den fünften Wert zu dem zweiten Zeitstempelwert umformen.

13. Vorrichtung zur Kompensation eines Zeitstempels einer Uhr nach Anspruch 12, wobei das zweite Erfassungsmodul umfasst:
ein berechnendes Untermodul, das so angeordnet ist, dass es einen unteren numerischen 64-Bit-Zahlenwert des ersten Zeitzählers und einen oberen numerischen 64-Bit-Zahlenwert des zweiten Zeitzählers addiert und einen Durchschnittswert berechnet, um den Zeitstempel-Kompensationswert zu ermitteln, oder die ganzzahligen Sekundenteile und die ganzzahligen Nanosekundenteile des ersten Zeitzählers und des zweiten Zeitzählers jeweils addiert, um Summen eines numerischen 33-Bit-Zahlenwerts der ganzzahligen Sekundenteile und einen numerischen 33-Bit-Zahlenwert der ganzzahligen Nanosekundenteile zu ermitteln, und dann eine Mittelwertbildung an den beiden Datenteilen durchzuführen, um jeweils einen ganzzahligen zweiten Teil mit einer 32-Bit-Breite und einen ganzzahligen Nanosekundenteil mit einer 32-Bit-Breite zu erhalten, und danach durch die CPU die oberen 16 Bit des ganzzahligen zweiten Teils hoch zu setzen, um den Zeitstempel-Kompensationswert zu bestimmen.

## Revendications

1. Procédé de compensation d'une horloge, comprenant:
la mise en place d'un premier compteur de temps et d'un second compteur de temps utilisant une horloge dans un système local et une horloge de service qui sont toutes deux des horloges provenant de sources différentes (11), dans laquelle l'horloge dans un système local et l'horloge de service sont activées pour compter simultanément;
détecter une première valeur d'horodatage lue par le premier compteur de temps et une seconde valeur d'horodatage lue par le second compteur de temps en utilisant un signal d'enregistrement d'horodatage à un moment prédéfini (12);
la détection d'une valeur de compensation d'horodatage en fonction de la première valeur d'horodatage et de la deuxième valeur d'horodatage (13) et
compensation d'une partie entière de l'horloge dans un système local en fonction de la valeur de compensation (14).

2. Procédé de compensation d'une horloge selon la revendication 1, dans lequel le premier compteur de temps et le second compteur de temps sont tous deux des compteurs de 80 bits.

3. Procédé pour compenser un horodatage d'une montre selon la revendication 2, dans lequel le premier compteur de temps comprend :
un premier compteur de secondes entières qui effectue un calcul de la partie de secondes entières ; et un premier compteur de nanosecondes entières qui effectue un calcul de la partie de nanosecondes entières et une opération de transfert;
ledit second compteur de temps comprend : un second compteur entier de secondes qui effectue un calcul de ladite seconde partie entière, un second compteur entier de nanosecondes qui effectue un calcul de ladite partie entière de nanosecondes et une opération de transfert, et un second compteur fractionnaire de nanosecondes qui effectue un calcul de ladite nanoseconde fractionnaire et une opération de transfert.

4. Procédé de compensation d'un horodatage d'une horloge selon la revendication 3, dans lequel le premier compteur entier de secondes est un compteur de 48 bits, et le premier compteur entier de nanosecondes est un compteur de 32 bits ; dans lequel- les 16 bits supérieurs du compteur de 48 bits sont définis par l'unité centrale; et
le deuxième compteur de secondes entières est un compteur de 32 bits, et le deuxième compteur de nanosecondes entières est un compteur de 32 bits, et le deuxième compteur de nanosecondes fractionnaires est un compteur de 16 bits.

5. Procédé de compensation d'un horodatage d'une montre selon la revendication 3, dans lequel l'étape de détection d'une première valeur d'horodatage lue à partir du premier compteur de temps en utilisant un signal d'enregistrement d'horodatage à un moment prédéterminé:
lorsque le signal d'enregistrement se produit à l'heure prédéfinie, détection d'une première valeur du premier compteur entier de secondes et d'une deuxième valeur du premier compteur entier de nanosecondes lue à partir du premier compteur de temps ; et
pour former la première valeur et la deuxième valeur à la première valeur d'horodatage.

6. Procédé de compensation d'un horodatage d'une montre selon la revendication 5, dans lequel l'étape de détection d'une deuxième valeur d'horodatage lue à partir du deuxième compteur de temps en utilisant un signal d'enregistrement d'horodatage à un moment prédéfini comprend:
lorsque le signal d'enregistrement se produit à l'heure prédéfinie, en détectant une troisième valeur du deuxième compteur entier de secondes, une quatrième valeur du deuxième compteur entier de nanosecondes et une cinquième valeur du deuxième compteur fractionnaire de nanosecondes lues à partir du deuxième compteur de temps;
en formant la troisième valeur, la quatrième valeur et la cinquième valeur dans la deuxième valeur d'horodatage.

7. Procédé pour compenser un horodatage d'une montre selon la revendication 6, dans lequel l'étape comprend l'obtention d'une valeur de compensation d'horodatage selon la première valeur d'horodatage et la deuxième valeur d'horodatage:
en ajoutant une valeur numérique basse de 64 bits du premier compteur de temps et une valeur numérique haute de 64 bits du second compteur de temps et en calculant une valeur moyenne pour obtenir la valeur de compensation ; ou
en ajoutant les parties entières de secondes et les parties entières de na-nosecondes du premier compteur de temps ou du deuxième compteur de temps pour obtenir les sommes d'une valeur numérique de 33 bits des parties entières de la seconde et d'une valeur numérique de 33 bits des parties entières de la nanoseconde, puis effectuer une moyenne par décalage sur les deux parties de données, pour obtenir une seconde partie entière d'une largeur de 32 bits et une partie nanoseconde entière d'une largeur de 32 bits, puis en réglant 16 bits de la seconde partie entière à la valeur haute par l'unité centrale pour acquérir la valeur de compensation de l'horodatage.

8. Dispositif de compensation d'une horloge, comprenant:
un module de temporisation adapté pour régler un premier compteur de temps et un second compteur de temps en utilisant une horloge dans un système local et une horloge de service, qui sont respectivement des horloges provenant de sources différentes, l'horloge dans un système local et l'horloge de service pouvant compter simultanément;
un premier module de détection conçu pour détecter une première valeur d'horodatage lue par le premier compteur de temps et une seconde valeur d'horodatage lue par le second compteur de temps à l'aide d'un signal d'enregistrement d'horodatage, chacune à un moment prédéfini ;
un second module de détection agencé pour détecter une valeur de compensation des pixels d'horodatage en fonction de la première valeur d'horodatage et de la seconde valeur d'horodatage un module de compensation agencé pour compenser une partie entière d'un horodatage de l'horloge dans un système local en fonction de la valeur de compensation de l'horodatage.

9. Dispositif de compensation d'une horloge selon la revendication 8, dans lequel le premier compteur de temps et le second compteur de temps sont tous deux des compteurs de 80 bits.

10. Dispositif pour compenser un horodatage d'une montre selon la revendication 9, le premier compteur de temps comprenant : un premier compteur de secondes entières qui effectue un calcul de la partie de secondes entières, et un premier compteur de nanosecondes entières qui effectue un calcul de la partie de nanosecondes entières et une opération de transfert; et
ledit second compteur de temps comprend: un second compteur entier de secondes qui effectue un calcul de ladite seconde partie entière, un second compteur entier de nanosecondes qui effectue un calcul de ladite partie entière de nanosecondes et une opération de transfert, et un second compteur fractionnaire de nanosecondes qui effectue un calcul de ladite nanoseconde fractionnaire et une opération de transfert.

11. Dispositif pour compenser un horodatage d'une horloge selon la revendication 10, dans lequel le premier compteur entier de secondes est un compteur de 48 bits et le premier compteur entier de nanosecondes est un compteur de 32 bits ; dans lequel les 16 bits supérieurs du compteur de 48 bits sont fixés par l'unité centrale; et
le deuxième compteur de secondes entières est un compteur de 32 bits, et le deuxième compteur de nanosecondes entières est un compteur de 32 bits, et le deuxième compteur de nanosecondes fractionnaires est un compteur de 16 bits

12. Dispotif pour compenser un horodatage d'une montre selon la revendication 10, dans lequel le premier module de détection comprend:
un premier sous-module de détection adapté pour détecter, lorsque le signal d'enregistrement d'horodatage se produit à l'instant prédéfini, une première valeur du premier second compteur entier et une seconde valeur du premier compteur nanosecondes entier lues à partir du premier compteur de temps, et pour former la première valeur et la seconde valeur en la première valeur d'horodatage ; etun second sous-module de détection adapté pour détecter, lorsque le signal d'enregistrement d'horodatage se produit à l'instant prédéfini, une seconde valeur du premier second compteur entier et une troisième valeur du premier compteur nanosecondes entier lues à partir du second compteur de temps, et pour former la première valeur et la seconde valeur en la première valeur d'horodatage; et
un deuxième sous-module de détection conçu pour détecter, lorsque le signal d'enregistrement se produit à l'instant prédéterminé, une troisième valeur du deuxième compteur entier de secondes, une quatrième valeur du deuxième compteur entier de nanosecondes et une cinquième valeur du deuxième compteur fractionnaire de nanosecondes lues par le deuxième compteur, et pour convertir la troisième valeur, la quatrième valeur et la cinquième valeur en la deuxième valeur d'horodatage.

13. Dispositif de compensation d'une montre selon la revendication 12, dans lequel le deuxième module de détection comprend:
un sous-module de calcul agencé pour ajouter une valeur numérique inférieure de 64 bits du premier compteur de temps et une valeur numérique supérieure de 64 bits du second compteur de temps et calculer une valeur moyenne pour obtenir la valeur de compensation de l'horodatage, ou pour ajouter les secondes parties entières et les nanosecondes entières du premier compteur de temps et du second compteur de temps, respectivement, pour obtenir la somme d'une valeur numérique de 33 bits des parties entières de la seconde et d'une valeur numérique de 33 bits des parties entières de la nanoseconde, puis en faisant la moyenne des deux parties de données, pour obtenir une seconde partie entière ayant une largeur de 32 bits et une partie nanoseconde entière ayant une largeur de 32 bits, respectivement, puis en incrémentant les 16 bits supérieurs de la seconde partie entière par l'unité centrale pour déterminer la valeur de compensation de l'horodatage.
